Europäisches Patentamt

European Patent Office

Office européen des brevets

(19)

(11) Veröffentlichungsnummer: **0 149 428**
**B1**

(12) **EUROPÄISCHE PATENTSCHRIFT**

(45) Veröffentlichungstag der Patentschrift:
**01.03.89**

(21) Anmeldenummer: **84810622.5**

(22) Anmeldetag: **14.12.84**

(51) Int. Cl.⁴: **G 05 D  23/275,** G 01 K  17/14

(54) **Einrichtung zur Feststellung der Differenz zweier unterschiedlicher, veränderlicher Temperaturen zur Auslösung eines Steuer-, Regel-, Mess- oder Registriervorgangs und Verwendung der Einrichtung in einem Wärmezähler.**

(30) Priorität: **13.01.84  CH 397/84**

(43) Veröffentlichungstag der Anmeldung:
**24.07.85 Patentblatt 85/30**

(45) Bekanntmachung des Hinweises auf die Patenterteilung:
**01.03.89 Patentblatt 89/9**

(84) Benannte Vertragsstaaten:
**AT BE DE FR GB IT LU NL SE**

(56) Entgegenhaltungen:
**DE-A- 1 938 287**
**DE-A- 2 008 690**
**DE-A- 2 136 387**
**GB-A- 596 054**
**US-A- 2 056 084**
**US-A- 2 404 596**
**US-A- 2 663 501**
**US-A- 3 593 578**
**US-A- 4 258 565**

(73) Patentinhaber: **Huber, Jakob, Les Aveneyres,**
**CH-1806 St-Légier /VD (CH)**

(72) Erfinder: **Huber, Jakob, Les Aveneyres,**
**CH-1806 St-Légier /VD (CH)**

(74) Vertreter: **Winkler, Kurt, Dr., Mellingerstrasse 69,**
**CH-5400 Baden (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft eine Einrichtung zur Auslösung eines von der Differenz zwischen zwei veränderlichen Temperaturen abhängigen elektrischen Impulses für die Einleitung eines Steuer-, Regel-, Meß- oder Registriervorganges, insbesondere für Fernbedienung.

Aus der US-A-2 663 501 ist eine Regeleinrichtung für einen gasbeheizten Heißwasserboiler bekannt, bei der die zum Brenner gelangende Gasmenge durch ein Drosselventil geregelt wird. Die Temperatur des Heißwassers und des Kaltwassers wird durch je einen Temperaturfühler (a, b) mit Ausdehnungsflüssigkeit gemessen, wobei die beiden Temperaturfühler über ein Wärmeleitblech wärmeleitend miteinander verbunden sind. Jeder Temperaturfühler ist über ein Kapillarrohr mit einem Metallbalg verbunden, die beide auf einer gemeinsamen Achse angeordnet und über je eine Schraubenfeder entgegengesetzt auf einen Ventilteller (9) des Drosselventils einwirken, so daß das Drosselventil in Abhängigkeit von der Größe der Temperaturdifferenz geöffnet wird.

Aus DE-A-20 08 690 ist ein Wärmemesser mit einem Temperaturdifferenzverschiebewandler (Fig. 4) bekannt, bei der die Temperaturdifferenz über zwei auf einer gemeinsamen Achse angeordneten und entgegengesetzt wirkenden Metallbälgen ermittelt und mittels eines Zeigers angezeigt wird, die durch zwei Temperaturfühler mit Ausdehnungsflüssigkeit über je ein Kapillarrohr betätigt werden.

Insbesondere läßt sich eine solche Einrichtung zur natürlichen Kühlung von Kellern für die Lagerung von beispielsweise Wein und Nahrungsmitteln verwenden, indem man in der warmen Jahreszeit, gesteuert von dieser Einrichtung, nachts durch Öffnen der Kellerfenster oder dafür vorgesehener, separater Öffnungen die wesentlich kältere Nachtluft in den Keller einströmen läßt und tagsüber, sobald die Außenlufttemperatur die Kellerlufttemperatur überwiegt, die Kellerfenster geschlossen hält. Die Austauschwirkung während der Nacht wird verstärkt durch einen Ventilator, der von der Einrichtung je nachdem, welche Temperatur höher ist, ein- oder ausgeschaltet und wobei gleichzeitig eine Klappe im Ansaugkanal und in einer Ausblasöffnung geöffnet bzw. geschlossen wird.

Eine solche Art der Vorratskühlung ist gleich vorteilhaft vom Standpunkt der Investitionskosten aus wie auch bezüglich der laufenden Kosten.

Die Erfindung wird im folgenden anhand von in der Zeichnung dargestellten Ausführungsbeispielen näher beschrieben.

Es stellen dar: die

Fig. 1 und 2 das Schema einer ersten Ausführungsform der erfindungsgemäßen Einrichtung, die

Fig. 3 und 4 zwei weitere Ausführungsformen.

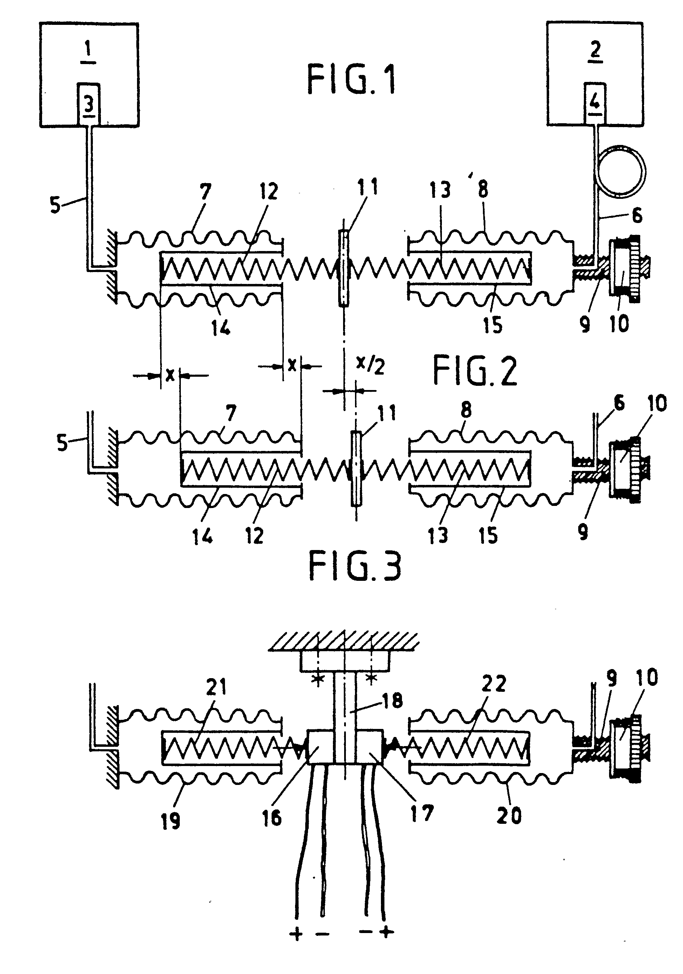

In Fig. 1 sind die beiden Räume, deren Temperaturdifferenz festgestellt werden soll, mit 1 und 2 bezeichnet. In diesen Räumen befindet sich je ein Temperaturfühler 3 bzw. 4, deren Ausdehnungsflüssigkeit durch flexible Kapillarrohre 5 bzw. 6 mit je einem geschlossenen Metallbalg 7 bzw. 8 kommuniziert.

Der linke Metallbalg 7 ist einseitig ortsfest fest verankert, wogegen der rechte Metallbalg 8 einen Gewindebolzen 9 und eine auf diesem verschraubbare Rändelmutter 10 aufweist, die in axialer Richtung raumfest fixiert ist und zur Feineinstellung der Neutralstellung einer Referenzplatte 11 dient. Letztere wird von zwei Schraubenfedern 12, 13, die sich mit ihren äußeren Enden am Boden von rohrförmigen Kolben 14, 15 abstützen, in einer Mittelstellung gehalten. Die Kolben 14, 15 bilden die innere Begrenzung der Metallbälge 7 bzw. 8 und gleichzeitig eine Führungshülse für die Federn 12 bzw. 13.

In Fig. 1 befindet sich die Referenzplatte 11 genau in der Mitte zwischen den beiden Metallbälgen, was dann der Fall ist, wenn die Temperaturen in den beiden Räumen 1 und 2 gleich sind. Bei der Konfiguration nach Fig. 2 ist die Temperatur im linken Raum 1 höher als im rechten Raum, so daß sich der Metallbalg 7 gegen den Widerstand der beiden Federn 12 und 13, des Metallbalgs 8 und natürlich der Flüssigkeit im letzteren sowie in der Leitung 6 und im Temperaturfühler 4 um die Strecke X gegenüber der Neutralstellung nach Fig. 1 gestreckt hat. Als Fixpunkt für die Verschiebung X kann das freie Ende des Metallbalgs 8 oder irgendein Punkt des als starr anzusehenden Kolbens 15, beispielsweise sein Boden, angenommen werden.

Da die zwei gleich langen Federn 12 und 13 in Reihe liegen, erfährt die Referenzplatte 11 eine halb so große Verschiebung wie der Boden des Kolbens 14, nämlich X/2.

Diese Verschiebung wird elektrisch zur Steuerung oder Regelung eines von der Temperaturdifferenz in den beiden Räumen 1 und 2 abhängigen Vorganges verwertet, wie etwa für die in der Einleitung erwähnte natürliche Kühlung von Vorratskellern.

Im einfachsten Falle wird man die Verschiebung X/2 der Referenzplatte zum Schließen oder Öffnen elektrischer Kontakte benutzen.

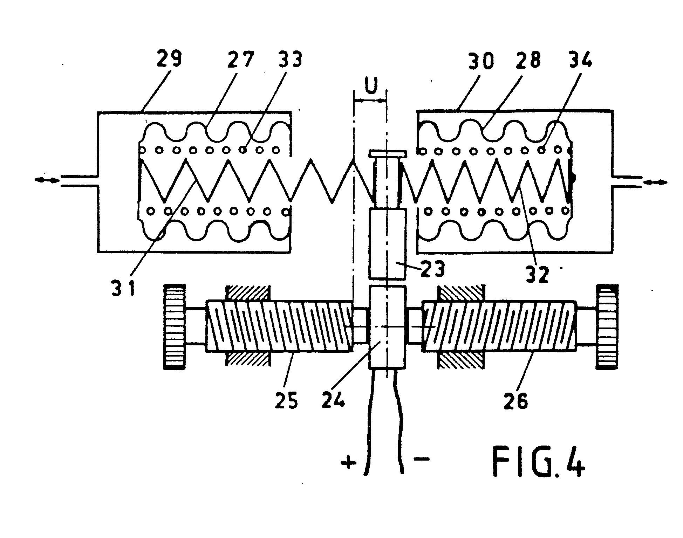

Die Fig. 3 zeigt eine Einrichtung der gegenständlichen Art, bei der der Steuer- oder Regelimpuls von zwei Piezoquarzen 16, 17 ausgelöst wird, die an einer feststehenden Stützplatte 18 befestigt sind und bei Vorhandensein unterschiedlicher Temperaturen in den zwei Räumen 1 und 2 von den zwei Metallbälgen 19, 20 über die Federn 21 und 22 verschieden stark belastet werden. Dementsprechend entstehen in den beiden Piezoquarzen verschieden hohe Spannungen, deren Differenz und/oder Summe auf bekannte Weise zur Erzeugung einer Steuerspannung zur Auslösung der oben beschriebenen Vorgänge benutzt werden können.

Anstelle von Piezoquarzen könnte man bei dieser Ausführung auch elektrische Widerstandselemente benutzen, die eine große Anzahl in einer elastischen Matrix eingebetteter Graphitkügelchen enthält, die mit steigendem Druck stärker aneinandergepreßt werden, wodurch ihr elektrischer Widerstand zufolge des zunehmenden Stromleitungsquerschnittes abnimmt. Demzufolge ist die Differenz und/oder Summe der elektrischen Widerstände dieser Elemente auch ein Maß für die zu messende Temperaturdifferenz zwischen den beiden Räumen 1 und 2 oder zwischen zwei Stellen in einem oder zwei festen Körpern oder gasförmigen oder flüssigen Medien.

Die Stützplatte 18 kann bei dieser Ausführung auch verstellbar sein, um zusätzlich zur Verstelleinrichtung, die aus dem Gewindebolzen 9 und der Rändelmutter 10 besteht, eine weitere Justiermöglichkeit zu haben.

Bei der Ausführung nach Fig. 4 ist die Referenzplatte 23 aus Eisen. Die Auslösung eines Steuervorgangs oder Regeleingriffs erfolgt durch einen berührungslosen Annäherungsschalter 24 bekannter Bauart, dessen Lage in bezug auf die Neutralstellung der Referenzplatte 23 durch zwei Einstellschrauben 25, 26 zwecks Vorgabe einer bestimmten Temperaturdifferenz, bei der ein Steuer- oder Regelvorgang stattfinden soll, verstellt werden kann. Sobald die Referenzplatte 23 bei Vorhandensein dieser Temperaturdifferenz um die Strecke u aus ihrer Neutralstellung heraus verschoben wird und dadurch in den Bereich des Annäherungsschalters 24 gelangt ist, löst dieser den Steuer- oder Regelvorgang aus.

Die Metallbälge 27 und 28 unterscheiden sich von jenen nach den Fig. 1 bis 3 dadurch, daß sie innerhalb eines zylindrischen Mantels 29 bzw. 30 angeordnet sind und die Metallbälge die Funktion der Kolben ausüben, die die Federn 31 bzw. 32 verschieben. Innerhalb der Metallbälge 27 und 28 ist außerdem je eine Ausgleichsfeder 33 bzw. 34 vorgesehen, welche die Hysterese des Metalls der Metallbälge aufheben soll, um Meßungenauigkeiten auszuschalten.

Es ist zu betonen, daß die beschriebenen Einrichtungen, wie auch alle anderen denkbaren Varianten derselben nur zur Feststellung von Temperaturdifferenzen dienen, wobei die Höhe der Temperaturen selbst gleichgültig ist.

Die Verwendung der Einrichtung beschränkt sich nicht auf die eingangs geschilderten Zwecke. Von den beweglichen Gliedern der Einrichtung, wie Kolben, Metallbalg, Federn, Referenzplatte usw., können noch weitere Betätigungen von Schaltern oder Relais abgeleitet werden, um für entsprechende Anforderungen, z.B. Endstellungen oder Extremwerte, zu begrenzen oder zu signalisieren.

Um eine von der Außentemperatur abhängige Steuerung einer Heizungsanlage zu erreichen, wird man außerhalb des Gebäudes und in einem Raum im Gebäudeinneren je einen Temperaturfühler anbringen und bei Auftreten einer bestimmten Temperaturdifferenz eine stärkere Befeuerung auslösen, um die Vorlauftemperatur zu erhöhen.

Bezeichnungsliste
1. Raum
2. Raum
3. Temperaturfühler
4. Temperaturfühler
5. Kapillarrohr
6. Kapillarrohr
7. Metallbalg
8. Metallbalg
9. Gewindebolzen
10. Rändelmutter
11. Referenzplatte
12. Schraubenfeder
13. Schraubenfeder
14. Kolben
15. Kolben
16. Piezoquarz
17. Piezoquarz
18. Stützplatte
19. Metallbalg
20. Metallbalg
21. Feder
22. Feder
23. Referenzplatte
24. Annäherungsschalter
25. Einstellschraube
26. Einstellschraube
27. Metallbalg
28. Metallbalg
29. Zylindr. Mantel
30. Zylindr. Mantel
31. Feder
32. Feder
33. Ausgleichsfeder
34. Ausgleichsfeder

**Patentansprüche**

1. Einrichtung zur Auslösung eines von der Differenz zwischen zwei veränderlichen Temperaturen abhängigen elektrischen Impulses für die Einleitung eines Steuer-, Regel-, Meß- oder Registriervorganges, insbesondere für Fernbedienung, wobei an zwei voneinander separierten und thermisch isolierten Stellen (1, 2) je ein Temperaturfühler (3, 4) mit Ausdehnungsflüssigkeit vorgesehen ist, von denen jeder über ein Kapillarrohr (5, 6) und einen Metallbalg (7, 8; 19, 20; 27, 28) auf eine Schraubenfeder (12, 13; 21, 22; 31, 32) einwirkt, wobei die beiden Federn eine gemeinsame Längsachse aufweisen und auf entgegengesetzten Seiten eines Referenzelements (11, 18, 23) angreifen, das bei Auftreten einer Temperaturdifferenz, jedoch unbeeinflußt von der jeweiligen absoluten Höhe der beiden Temperaturen, den elektrischen Impuls auslöst, welcher über einen Schaltmechanismus den jeweils vorgesehenen Vorgang einleitet und welcher erst zur Auslösung kommt, wenn die Temperaturdifferenz einen festlegbaren Wert erreicht hat.

2. Einrichtung nach Anspruch 1, dadurch gekennzeichnet, daß das Referenzelement eine zwischen den beiden Federn (12, 13; 31, 32) parallele zu deren Längsachse verschiebbare Platte (11, 23) ist.

3. Einrichtung nach Anspruch 2, dadurch gekennzeichnet, daß der Schaltmechanismus ein mit der verschiebbaren Platte (23) in Wirkverbindung stehender Annäherungsschalter (24) ist.

4. Einrichtung nach Anspruch 1, dadurch gekennzeichnet, daß das Referenzelement eine feststehende Stützplatte (18) ist.

5. Einrichtung nach Anspruch 4, dadurch gekennzeichnet, daß zu beiden Seiten der Stützplatte (18) je ein von je einer der beiden Federn (21, 22) beaufschlagbarer Piezoquarz (16, 17) angeordnet ist.

6. Einrichtung nach Anspruch 1, dadurch gekennzeichnet, daß die beiden Federn (12, 13; 21, 22; 31, 32) eine gleiche Länge haben.

**Claims**

1. Arrangement for releasing an electrical impulse which depends on the difference between two changing temperatures, in order to activate a control, regulating, measuring, or recording process, in particular for remote operation, by means of temperature sensors (3, 4) containing expansion fluid which are placed at separate locations (1, 2) and are thermally insulated from each other, each of which acts through a capillary tube (5, 6) and a metal bellows (7, 8; 19, 20; 27, 28) on a helical spring (12, 13; 21, 22; 31, 32), whereby the two springs possess a common longitudinal axis and act on opposite sides of a reference plate (11, 18, 23), so that when a temperature difference occurs, but without any influence from the magnitude of the respective temperatures, the electrical impulse is released and through a switch activates the required process, being first released when the temperature difference has reached a certain value which can be set.

2. Arrangement according to claim 1, characterized by the fact that the reference element is a movable plate (11, 23) located between the two springs (12, 13; 31, 32) and parallel to their longitudinal axis.

3. Arrangement according to claim 2, characterized by the fact that the switching mechanism is a proximity switch (24) which acts in conjunction with the movable plate (23).

4. Arrangement according to claim 1, characterized by the fact that the reference element is a fixed supporting plate (18).

5. Arrangement according to claim 4, characterized by the fact that one of the piezoelectric crystals (16, 17) which can be acted on by one of the two springs (21, 22) is placed at each side of the supporting plate (18).

6. Arrangement according to claim 1, characterized by the fact that each of the two springs (12, 13; 21, 22; 31, 32) have the same length.

**Revendications**

1. Dispositif pour le déclenchement d'une température résultant de la différence entre deux températures, différenciées et variables, dépendantes d'impulsions électriques pour l'introduction d'un processus de commande, de réglage, de mesure ou d'enregistrement, en particulier pour la commande à distance, une sonde de température (3, 4) avec liquide de dilatation étant prévue dans deux endroits séparés l'un de l'autre (1, 2) et isolés thermiquement, lesquels agissent chacun par un tube capillaire (5, 6) et un soufflet métallique (7, 8; 19, 20; 27, 28) sur un ressort cylindrique (12, 13; 21, 22; 31, 32), les deux ressorts disposant d'un axe longitudinal commun et prenant appui chacun de façon opposée sur les côtés d'un élément de référence (11, 18, 23), si bien qu'à l'apparition d'une différence de température, influencée cependant par le niveau le plus élevé des deux températures, déclenche l'impulsion électrique, laquelle, par un mécanisme de commutation, introduit le processus prévu, ce dernier ne parvenant au déclenchement que si la différence de température a atteint une valeur déterminable.

2. Dispositif selon spécification 1, caractérisé par le fait que l'élément de référence est constitué par un disque déplaçable (11, 23) entre les deux ressorts (12, 13; 31, 32), parallèlement à leur axe longitudinal.

3. Dispositif selon spécification 2, caractérisé par le fait que le mécanisme de commutation est constitué d'un détecteur d'approche (24) vertical agissant en relation avec le disque déplaçable (23).

4. Dispositif selon spécification 1, caractérisé par le fait que l'élément de référence est constitué par un disque d'appui (18) stationnaire.

5. Dispositif selon spécification 4, caractérisé par le fait que sur les deux côtés du disque d'appui (18) un cristal de quartz, piézoélectrique (16, 17) est fixé en prolongement des deux ressorts (21, 22).

6. Dispositif selon spécification 1, caractérisé par le fait que les deux ressorts (12, 13; 21, 22; 31, 32) disposent d'une longueur identique.

# FIG.1

# FIG.2

# FIG.3

FIG.4